# EUROPEAN PATENT APPLICATION

(11) **EP 2 131 580 A1**
(43) Date of publication of application: **09.12.2009**
(21) Application number: 09011737.5
(22) Date of filing: 16.06.2006
(51) Int. Cl.: H04N 5/76, G11B 27/00

(54) **Playback method in a digital multimedia broadcasting receiver and digital multimedia broadcasting receiver therefor**

(30) Priority: 16.06.2005 KR 20050051967
(62) Divisional of application: 06012411.2
(71) Applicant: Samsung Electronics Co., Ltd., Suwon-si Gyeonggi-do 443-742 (KR)
(72) Inventor: Lee, Yeon-Ju, Suwon-si Gyeonggi-do (KR)
(74) Representative: Grünecker, Kinkeldey, Stockmair & Schwanhäusser Anwaltssozietät

(57) **Abstract**

Provided are a method for playing back stored Digital Multimedia Broadcasting (digital multimedia broadcasting) and a digital multimedia broadcasting receiver using the method. In the method, at least one playback start point is set during storage of digital multimedia broadcasting, and when a playback start point is selected from the set playback start points during playback of a stored broadcasting file, the stored broadcasting file is played back from the selected playback start point.

## Description

The present invention generally relates to Digital Multimedia Broadcasting (DMB), and in particular, to a method for playing back stored DMB and a DMB receiver using the method.

Generally, in order to view a stored broadcasting file from a desired point, a user of a DMB receiver must drag an adjustment portion for adjusting a playback point to the desired point. This procedure is similar to using a fast forward function during playback of videotaped media. Thus, if the desired point is far away from the beginning of a broadcasting file, the time required for the drag is increased. Moreover, the conventional DMB receiver continuously displays video frames of the stored broadcasting file, without allowing the user to control the playback speed of the broadcasting file.

It is, therefore, the object of the present invention to provide a method for playing back stored Digital Multimedia Broadcasting (DMB) in multiple ways and a DMB receiver using the method.

This object is solved by the subject matter of the independent embodiments.

Preferred embodiments are defined in the dependent embodiments.

According to an aspect of the present invention, there is provided a playback method in a DMB receiver. The playback method includes setting at least one playback start point during storage of DMB, checking whether a playback start point is selected from the set playback start points during playback of a stored broadcasting file, and playing back the stored broadcasting file from the selected playback start point.

According to another aspect of the present invention, there is provided a DMB receiver including a key input unit, a memory unit, and a controller. The key input unit sets playback start points during storage of DMB and receives a user key input for selecting one of the set playback start points. The memory unit stores a broadcasting file and data about the broadcasting file in which the playback start points are set. The controller sets time points at which the user key input through the key input unit is sensed as the playback start points of the broadcasting file that is being stored, stores the broadcasting file, and when a playback start point is selected through the key input unit from the set playback start points during playback of the stored broadcasting file, plays back the stored broadcasting file from the selected playback start point.

According to a further aspect of the present invention, there is provided a playback method in a DMB receiver. The playback method includes setting at least one playback start point during playback of a stored broadcasting file, checking whether a playback start point is selected from the set playback start points during playback of the stored broadcasting file in which the playback start points are set, and playing back the stored broadcasting file from the selected playback start point.

According to still a further aspect of the present invention, there is provided a DMB receiver including a key input unit, a memory unit, and a controller. The key input unit sets at least one playback start point during playback of a stored broadcasting file and receives a user key input for selecting one of the set playback start points. The memory unit stores the stored broadcasting file and data related to the stored broadcasting file in which the set playback start points are set. The controller sets time points at which the user key input through the key input unit is sensed as the playback start points of the broadcasting file that is being played back, stores the broadcasting file, and when a playback start point is selected through the key input unit from the set playback start points during playback of the stored broadcasting file in which the playback start points are set, plays back the stored broadcasting file from the selected playback start point.

According to yet another aspect of the present invention, there is provided a playback method in a DMB receiver. The playback method includes sensing a set key input during playback of a stored broadcasting file, and when the key input is set to reduce the playback speed of the broadcasting file, reducing the number of video frames played back from the broadcasting file, and when the key input is set to increase the playback speed of the broadcasting file, increasing the number of video frames played back from the broadcasting file.

According to yet a further aspect of the present invention, there is provided a DMB receiver including a memory unit, a key input unit, and a controller. The memory unit stores a broadcasting file. The key input unit receives a user key input for controlling the playback speed of the stored broadcasting file during playback of the stored broadcasting file. The controller controls the number of video frames played back from the broadcasting file according to the user key input when sensing the user key input, and for controlling the playback speed through the key input unit during playback of the broadcasting file stored in the memory unit.

The above object and other aspects, features, and advantages of preferred embodiments of the present invention will be more apparent from the following description taken in conjunction with the accompanying drawings, in which:
FIG. 1 is a block diagram of a Digital Multimedia Broadcasting (DMB) receiver that plays back stored DMB in multiple ways according to the present invention;
FIGs. 2 through 4 illustrate a process of setting a playback start point according to the present invention;
FIGs. 5 through 7 illustrate a process of playing back a broadcasting file from a playback start point according to the present invention;
FIGs. 8 through 10 illustrate a process of controlling a playback speed according to the present invention;
FIG. 11 is a flowchart illustrating a process of setting a playback start point during storage of DMB or playback of a stored broadcasting file according to the present invention; and
FIG. 12 is a flowchart illustrating a process of playing back stored DMB in multiple ways according to the present invention.

The matters defined in the description such as a detailed construction and elements are provided to assist in a comprehensive understanding of preferred embodiments of the invention. Accordingly, those of ordinary skill in the art will recognize that various changes and modifications of the embodiments described herein can be made without departing from the scope and spirit of the invention. Also, descriptions of well-known functions and constructions are omitted for the sake of clarity and conciseness.

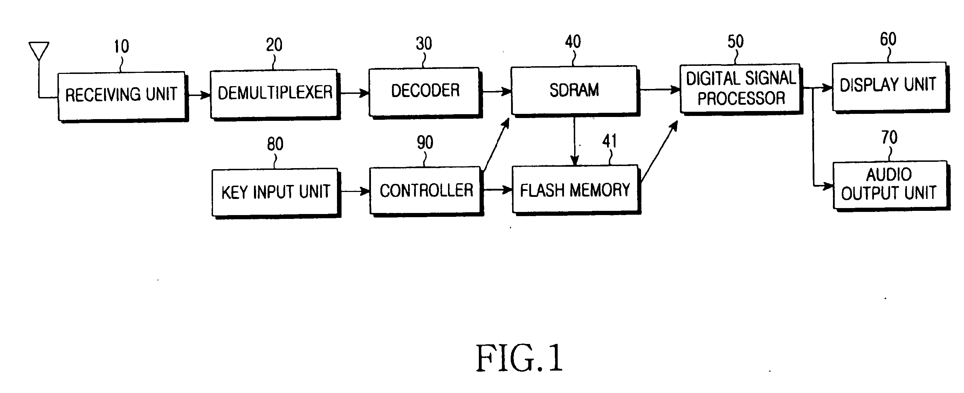

FIG. 1 is a block diagram of a Digital Multimedia Broadcasting (DMB) receiver that plays back stored DMB in multiple ways according to the present invention.

In the DMB receiver, a receiving unit 10 receives a DMB signal through an antenna and a demultiplexer 20 demultiplexes the received DMB signal and outputs it to a decoder 30. After the decoder 30 decodes the demultiplexed DMB signal, a memory unit including a Synchronous Dynamic Random Access Memory (SDRAM) 40 stores video frames of decoded DMB. The memory unit also includes a flash memory 41 that stores the stored video frames of decoded DMB, a broadcasting file composed of the stored video frames, and data related to a playback start point set in the broadcasting file.

A digital signal processor 50 continuously decodes video frames output from the SDRAM 40 using a Digital Signal Process (DSP) codec and outputs the decoded video frames to a display unit 60 and an audio output unit 70. Thus, a user can watch a DMB through the display unit 60 and the audio output unit 70 from which the video frames are continuously output. A key input unit 80 includes a storage start key for starting storage of the DMB, a storage termination key for terminating storage of the DMB, a playback key for playing back a stored broadcasting file, a bookmark key for setting a playback start point during storage of the DMB or playback of a stored broadcasting file, left/right direction keys for selecting a set playback start point, and a control key for controlling a playback speed during playback of a stored broadcasting file.

If the user presses the storage start key, the key input unit 80 outputs a storage request signal to a controller 90. Upon receipt of the storage request signal, the controller 90 stores video frames of a decoded DMB stored in the SDRAM 40 in the flash memory 41. If the user presses the storage termination key during storage of the DMB, the key input unit 80 outputs a storage termination signal to the controller 90. Upon receipt of the storage termination signal, the controller 90 terminates storage of the decoded video frames in the flash memory 41, generates a broadcasting file with the stored video frames, and stores the generated broadcasting file in the flash memory 41.

If the user selects the stored broadcasting file and presses the playback key, the key input unit 80 outputs a playback request signal for playing back the selected broadcasting file to the controller 90. Thus, the controller 90 continuously decodes the video frames that are included in the selected broadcasting file stored in the flash memory 41 using the DSP codec and outputs the decoded video frames to the display unit 60 and the audio output unit 70. In this manner, the user can watch a stored DMB through the display unit 60 and the audio output unit 70.

If the user presses the bookmark key during storage of the DMB or playback of a stored broadcasting file, the key input unit 80 outputs a playback start point setting request signal for setting a playback start point to the controller 90. The controller 90 designates the input time point of the playback start point setting request signal, i.e., the time elapsed from the initial playback start point of a broadcasting file that is being stored or played back, as data related to the playback start point of the broadcasting file that is being stored or played back, and stores the data in the flash memory 41.

The controller 90 marks a point set as a playback start point on a playback time display means and displays the wording indicating that the playback start point is set through the display unit 60. Data related to the playback start points marked on the playback time display means is stored in the flash memory 41.

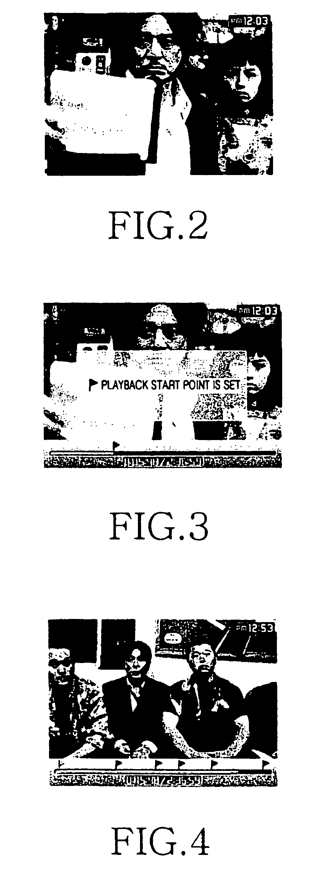

FIG. 2 illustrates a moving picture screen displayed through the display unit 60 during storage of current broadcasting or playback of a stored broadcasting file in the DMB receiver.

When a screen desired by the user appears during display of the moving picture as illustrated in FIG. 2 and the user presses the bookmark key, the key input unit 80 outputs the playback start point setting request signal to the controller 90. The controller 90 designates the input time point of the playback start point setting request signal as data related to the playback start point of a broadcasting file that is being stored or played back and stores the data in the flash memory 41. The controller 90 marks a point set as a playback start point on the playback time display means and displays the wording indicating that the playback start point is set as illustrated in FIG. 3.

The user can set at least one playback start point of the broadcasting file that is being stored or played back, by pressing the bookmark key whenever a user desired screen appears. A screen illustrated in FIG. 4 includes at least one playback start point.

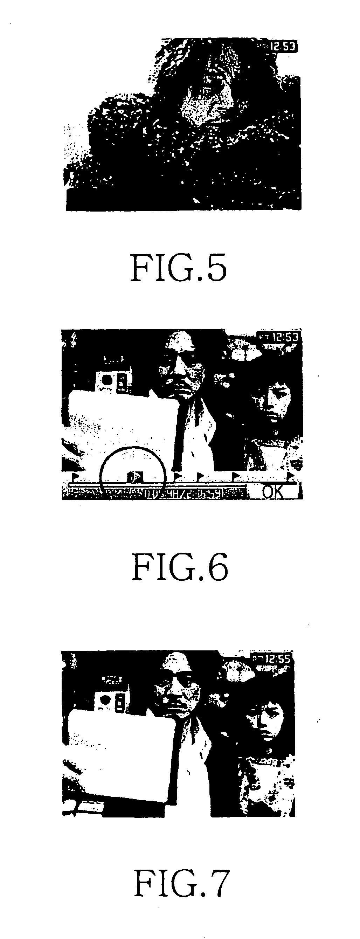

After the playback start points are set, when the user selects the broadcasting file in which the playback start points are set and presses the playback key, the key input unit 80 outputs the playback request signal to the controller 90. The controller 90 continuously decodes video frames included in the selected broadcasting file stored in the flash memory 41 using the DSP codec and outputs the decoded video frames to the display unit 60 and the audio output unit 70. Thus, a screen as illustrated in FIG 5 is displayed on the display unit 60.

In this state, the user can select a desired playback start point among the set playback start points using the left/right direction keys. If the user presses the left or right direction key, the controller 90 reads data related to playback start point of the played broadcasting file from the flash memory 41. The controller 90 marks playback start points on the playback time display means according to the read data and displays the playback time display means on the played screen as illustrated in FIG. 6.

If the user selects the desired playback start point using the left or right direction key, the controller 90 reads data about the selected playback start point from the flash memory 41. The controller 90 then plays back the broadcasting file according to the read data and a moving picture is played back on the display unit 60 from a screen corresponding to the selected playback start time as illustrated in FIG. 7. The user can also select another desired playback start point by pressing the left or right direction key during playback of the broadcasting file from the selected playback start point. The user can also set another playback start point by pressing the bookmark key whenever a desired screen appears.

The DMB receiver according to the present invention can also control the playback speed of a stored broadcasting file during playback. If the user selects a stored broadcasting file and presses the playback key, the key input unit 80 outputs the playback request signal to the controller 90. The controller 90 then continuously decodes video frames included in the selected broadcasting file stored in the flash memory 41 using the DSP codec and outputs the decoded video frames to the display unit 60 and the audio output unit 70. In this manner, the user can watch stored DMB through the display unit 60 and the audio output unit 70. At this time, the user can control a playback speed using the control key.

The control key generates a playback speed control signal for increasing or reducing the playback speed of a broadcasting file and is included in the key input unit 80. To increase and reduce the playback speed of a broadcasting file, separate control keys may be included in the key input unit 80. Alternatively, the playback speed of a broadcasting file may be increased or reduced according to the time during which the control key implemented with a single key is pressed.

For example, the user may briefly press or hold down the control key, and the controller 90 receives the playback speed control signal generated from the key input unit 80 through the user's manipulation of the control key. The controller 90 compares the input time of the playback speed control signal with a set time and determines that the input playback speed control signal is intended to increase a playback speed if the input time is less than the set time. If the input time is greater than the set time, the controller 90 determines that the input playback speed control signal is intended to reduce a playback speed.

The controller 90 controls the output of video frames stored in the flash memory 41 according to the playback speed control signal generated through manipulation of the control key. If the playback speed control signal is intended to reduce a playback speed, the controller 90 reduces the number of video frames output from the flash memory 41. By reducing the number of output video frames, the playback speed of a moving picture displayed on the display unit 60 reduces. If the playback speed control signal is intended to increase a playback speed, the controller 90 increases the number of video frames output from the flash memory 41. By increasing the number of output video frames, the playback speed of the moving picture displayed on the display unit 60 increases.

Whenever sensing the playback speed control signal, the controller 90 halves or doubles the number of video frames output from the flash memory 41 according to the sensed playback speed control signal.

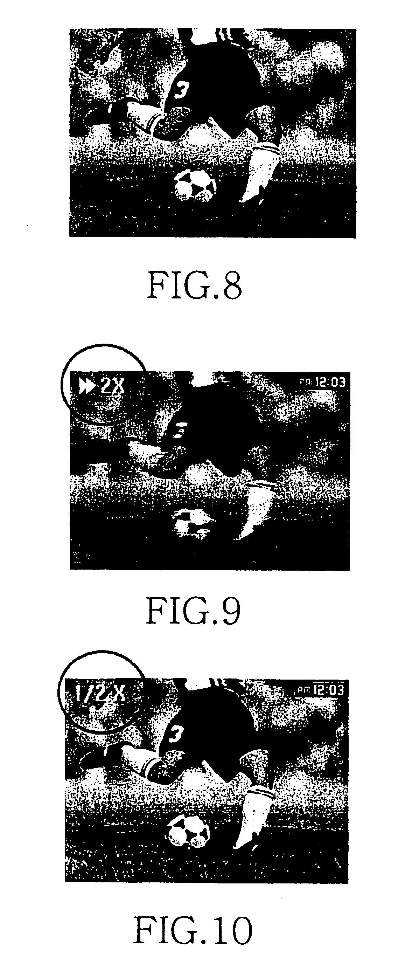

FIG. 8 illustrates a screen of a stored broadcasting file played back without control of a playback speed. Upon receipt of a playback speed control signal for increasing the playback speed from the key input unit 80, the controller 90 doubles the number of video frames output from the flash memory 41. The controller 90 also displays the wording indicating that the playback speed is doubled as illustrated in FIG. 9. Since the number of video frames output from the flash memory 41 is doubled, the playback speed of the moving picture displayed on the display unit 60 is also doubled.

In this state, upon receipt of the playback speed control signal for increasing the playback speed from the key input unit 80, the controller 90 doubles again the number of video frames output from the flash memory 41. Thus, the number of video frames output from the flash memory 41 is quadrupled compared to the initial number of output video frames, and the controller 90 displays the wording indicating that the playback speed is quadrupled compared to the initial playback speed. Consequently, the playback speed of the moving picture displayed on the display unit 60 is doubled compared to its immediately previous playback speed and is quadrupled compared to the initial playback speed. In other words, the controller 90 doubles the number of output video frames and displays the wording indicating an increased ratio whenever the playback speed control signal for increasing the playback speed is input from the key input unit 80.

When receiving the playback speed control signal for reducing the playback speed from the key input unit 80, the controller 90 halves the number of video frames output from the flash memory 41. Since the playback speed is halved from 4x to 2x, the controller 90 displays the wording indicating that the playback speed is doubled compared to the initial playback speed. Since the number of output video frames is halved, the playback speed of the moving picture displayed on the display unit 60 is halved from 4x to 2x and thus doubled compared to the initial playback speed. In this manner, the playback speed of the broadcasting file can be controlled adaptively according to user's manipulation of the control key.

In FIG. 8, upon receipt of the playback speed control signal for reducing the playback speed from the key input unit 80, the controller 90 halves the number of video frames output from the flash memory 41 and displays the wording indicating that the playback speed is halved as illustrated in FIG. 10. Since the number of output video frames is halved, the playback speed of the moving picture displayed on the display unit 60 is halved compared to the initial playback speed.

When receiving the playback speed control signal for reducing again the playback speed from the key input unit 80, the controller 90 halves again the number of video frames output from the flash memory 41. Thus, the number of output video frames is 1/4 of the initial number of output video frames and the controller 90 displays the wording indicating that the playback speed is reduced to 1/4 of the initial playback speed. Consequently, the playback speed of the moving picture displayed on the display unit 60 is reduced to 1/2 of its immediately previous playback speed and to 1/4 of the initial playback speed. In other words, the controller 90 halves the number of output video frames and displays the wording indicating a reduction ratio whenever the playback speed control signal for reducing the playback speed is input from the key input unit 80.

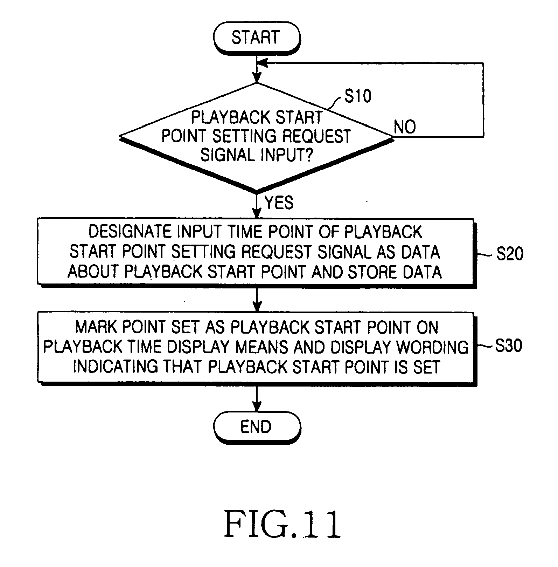

FIG. 11 is a flowchart illustrating a process of setting a playback start point during storage of DMB or playback of a stored broadcasting file according to the present invention.

The user of the DMB receiver may set a playback start point for playing back a broadcasting file from a desired point during storage of a DMB or playback of the broadcasting file. If a screen desired by the user appears while a user is watching a broadcasting and the user presses the bookmark key, the key input unit 80 outputs the playback start point setting request signal to the controller 90.

The controller 90 checks whether the playback start point setting request signal is input from the key input unit 80 during storage of the DMB or playback of a stored broadcasting file in step S10. If the playback start point setting request signal is input from the key input unit 80, the controller 90 designates the input time point of the playback start point setting request signal, i.e., the time elapsed from the initial playback start point of a broadcasting file that is being stored or played back, as data related to the playback start point of the broadcasting file that is being stored or played back and the data is stored in the flash memory 41 in step S20.

The controller 90 marks a point set as the playback start point on the playback time display means and displays the wording indicating that the playback start point is set through the display unit 60 in step S30. Data related to the playback start point marked on the playback time display means is stored in the flash memory 41 in step S20.

The user can continuously set the playback start point by pressing the bookmark key whenever a desired screen appears and the controller 90 receiving the playback start point setting request signal from the key input unit 80 repeats steps S10 through S30 until storage or playback of the broadcasting is terminated.

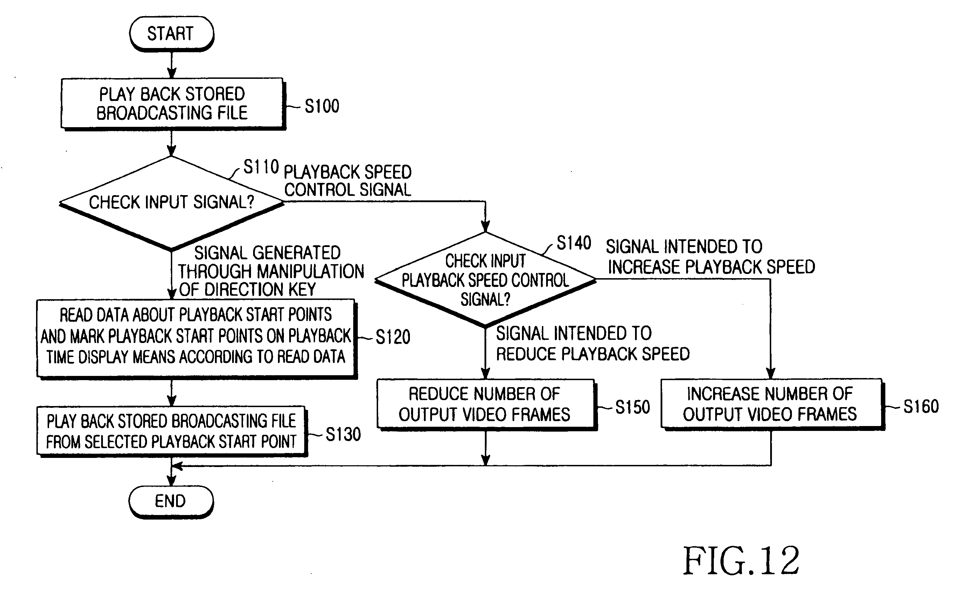

FIG. 12 is a flowchart illustrating a process of playing back stored DMB in multiple ways according to the present invention.

When the user selects a stored broadcasting file in which playback start points are set and presses the playback key, the key input unit 80 outputs the playback request signal for playing back the selected broadcasting file to the controller 90. Thus, the controller 90 continuously decodes video frames included in the selected broadcasting file stored in the flash memory 41 and outputs the decoded video frames to the display unit 60 and the audio output unit 70 in step S100.

In this state, the user can select a desired playback start point among the set playback start points using the left or right direction key. The user can also control the playback speed of the played broadcasting file using the control key. Upon receipt of a signal from the key input unit 80 during playback of the selected broadcasting file, the controller 90 checks the received signal in step S110.

If the received signal is generated according to manipulation of the left or right direction key, the controller 90 reads data related to the playback start point of the played broadcasting file from the flash memory 41. The controller 90 then marks the playback start point on the playback time display means according to the data read from the flash memory 41, and displays the playback time display means on the displayed screen in step S120.

Thus, the user can select the desired playback start point by manipulating the left or right direction key. If one of the playback start points displayed on the playback time display means is selected, the controller 90 reads data related to the selected playback start point from the flash memory 41 and plays back the broadcasting file from the playback start point according to the data read from the flash memory 41 in step S130. If the user selects another desired playback start time by pressing the left or right direction key during playback of the broadcasting file from the selected playback start time, the controller 90 repeats step S130. The user can also set a new playback start time in the played broadcasting file by pressing the bookmark key whenever a desired screen appears.

If the signal received from the key input unit 80 in step S110 is the playback speed control signal generated according to manipulation of the control key, the controller 90 checks whether the received signal is intended to increase or reduce the playback speed in step S140. If the received playback speed control signal is intended to reduce the playback speed, the controller 90 reduces the number of video frames output from the flash memory 41 in step S150. Since the number of video frames output form the flash memory 41 is reduced, the playback speed of the moving picture displayed on the display unit 60 is also reduced.

If the received playback speed control signal is intended to increase the playback speed, the controller 90 increases the number of video frames output from the flash memory 41 in step S160. Accordingly, the playback speed of the moving picture displayed on the display unit 60 also increases. In this manner, the user can change or set the playback start point or control the playback speed through the key input unit 80 during playback of the stored broadcasting file. Control of the playback speed can be made in a stored broadcasting file in which playback start points are not set.

As described above, according to the present invention, the user can watch a DMB file from a desired point by setting playback start points in the DMB file, which increases the user's convenience. The user can also conveniently watch a moving picture at a desired speed by controlling the playback speed of the DMB file.

While the present invention has been shown and described with reference to a preferred embodiment thereof, it will be understood by those skilled in the art that various changes in form and details may be made therein without departing from the scope of the invention.

### The following is a list of further preferred embodiments of the invention:

1. A playback method in a digital multimedia broadcasting receiver, comprising the steps of:
   setting at least one playback start point during storage of digital multimedia broadcasting;
   checking whether a playback start point is selected from the at least one playback start point during playback of a stored broadcasting file; and
   playing back the stored broadcasting file from the selected playback start point when the playback start point is selected.
2. A playback method in a digital multimedia broadcasting receiver, comprising the steps of:
   setting at least one playback start point during playback of a stored broadcasting file;
   checking whether a playback start point is selected from the at least one playback start point during playback of the stored broadcasting file in which the at least one playback start point is set; and
   playing back the stored broadcasting file from the selected playback start point when the playback start point is selected.
3. The playback method of embodiment 1 or 2, wherein, when a set key input is sensed, a time at which the key input is sensed is set as the playback start point.
4. The playback method of one of embodiments 1 to 3, further comprising marking a point that is set as the at least one playback start point on a playback time display means for displaying a playback time of the stored broadcasting file.
5. The playback method of one of embodiments 1 to 4, further comprising displaying wording indicating that the at least one playback start point is set when the at least one playback start point is set.
6. The playback method of one of embodiments 1 to 5, wherein the selected playback start point is selected from the at least one playback start point using a direction key.
7. A digital multimedia broadcasting receiver, comprising:
   a key input unit for setting playback start points during storage of digital multimedia broadcasting and receiving a user key input for selecting one of the set playback start points;
   a memory unit for storing a broadcasting file and data related to the broadcasting file in which the playback start points are set; and
   a controller for setting time points at which the user key input through the key input unit are sensed as the playback start points of the broadcasting file that is being stored, storing the broadcasting file, and when a playback start point is selected through the key input unit from the set playback start points during playback of the stored broadcasting file, playing back the stored broadcasting file from the selected playback start point.
8. The digital multimedia broadcasting receiver of embodiment 7, wherein the controller marks a point that is set as one of the playback start points on a playback time display means for displaying a playback time of the stored broadcasting file.
9. The digital multimedia broadcasting receiver of embodiment 7 or 8, wherein the controller displays wording indicating that one of the playback start points is set when one of the playback start points is set.
10. The digital multimedia broadcasting receiver of one of embodiments 7 to 9, wherein the key input unit comprises a direction key for selected the playback start point from the set playback start points.
11. A digital multimedia broadcasting receiver, comprising:
   a key input unit for setting at least one playback start point during playback of a stored broadcasting file and receiving a user key input for selecting one at least one playback start point;
   a memory unit for storing the stored broadcasting file and data related to the stored broadcasting file in which the at least one playback start point is set; and
   a controller for setting a time point at which the user key input through the key input unit is sensed as the at least one playback start point of the broadcasting file that is being played back, storing the broadcasting file, and when a playback start point is selected through the key input unit from the at least one playback start point during playback of the stored broadcasting file in which the at least one playback start point is set, playing back the stored broadcasting file from the selected playback start point.
12. The digital multimedia broadcasting receiver of embodiment 11, wherein the controller marks a point that is set as one at least one playback start point on a playback time display means for displaying a playback time of the stored broadcasting file.
13. The digital multimedia broadcasting receiver of embodiment 11 or 12, wherein the controller displays wording indicating that the at least one playback start point is set when the at least one playback start point is set.
14. The digital multimedia broadcasting receiver of one of embodiments 11 to 13, wherein the key input unit comprises a direction key for choosing the selected playback start point from the at least one playback start point.
15. A playback method in a digital multimedia broadcasting receiver, comprising the steps of:
   sensing a set key input during playback of a stored broadcasting file;
   reducing a number of video frames played back from the broadcasting file, when the key input is set to reduce a playback speed of the broadcasting file; and
   increasing the number of video frames played back from the broadcasting file, when the key input is set to increase the playback speed of the broadcasting file.
16. The playback method of embodiment 15, further comprising halving the number of video frames played back from the broadcasting file, when sensing that the key input is set to reduce the playback speed of the broadcasting file.
17. The playback method of embodiment 16, further comprising displaying wording indicating that the playback speed is halved when the number of video frames played back from the broadcasting file is halved.
18. The playback method of one of embodiments 15 to 17, further comprising doubling the number of video frames played back from the broadcasting file, when sensing that the key input is set to increase the playback speed of the broadcasting file.
19. The playback method of embodiment 16, further comprising displaying wording indicating that the playback speed is doubled when the number of video frames played back from the broadcasting file is doubled.
20. The playback method of one of embodiments 15 to 19, further comprising increasing the number of video frames played back from the broadcasting file, when a time during which a key for increasing or reducing the playback speed is pressed is less than a set time period.
21. The playback method of one of embodiments 15 to 19, further comprising reducing the number of video frames played back from the broadcasting file, when a time during which a key for increasing or reducing the playback speed is pressed is greater than a set time period.
22. The playback method of one of embodiments 15 to 19, wherein a plurality of keys is included for increasing or reducing the playback speed.
23. A digital multimedia broadcasting receiver, comprising:
   a memory unit for storing a broadcasting file;
   a key input unit for receiving a user key input for controlling a playback speed of the stored broadcasting file during playback of the stored broadcasting file; and
   a controller for controlling a number of video frames played back from the broadcasting file according to the user key input when sensing the user key input, and for controlling the playback speed through the key input unit during playback of the broadcasting file stored in the memory unit.
24. The digital multimedia broadcasting receiver of embodiment 23, wherein the controller reduces the number of video frames played back from the broadcasting file when the sensed user key input is set to reduce the playback speed.
25. The digital multimedia broadcasting receiver of embodiment 24, wherein the controller halves the number of video frames played back from the broadcasting file when sensing that the user key input is set to reduce the playback speed.
26. The digital multimedia broadcasting receiver of embodiment 25, wherein the controller displays wording indicating that the playback speed is halved when the number of video frames played back from the broadcasting file is halved.
27. The digital multimedia broadcasting receiver of one of embodiments 23 to 26, wherein the controller increases the number of video frames played back from the broadcasting file when the sensed user key input is set to increase the playback speed.
28. The digital multimedia broadcasting receiver of embodiment 27, wherein the controller doubles the number of video frames played back from the broadcasting file when sensing that the user key input is set to increase the playback speed.
29. The digital multimedia broadcasting receiver of embodiment 28, wherein the controller displays wording indicating that the playback speed is doubled when the number of video frames played back from the broadcasting file is doubled.
30. The digital multimedia broadcasting receiver of one of embodiments 23 to 29, wherein the key input unit includes a control key for controlling the playback speed, and the controller increases the number of video frames played back from the broadcasting file when a time during which the control key is pressed is less than a set time period.
31. The digital multimedia broadcasting receiver of embodiment 30, wherein the controller reduces the number of video frames played back from the broadcasting file when the time during which the control key is pressed is greater than a set time period.
32. The digital multimedia broadcasting receiver of one of embodiments 24 to 26, wherein the key input unit includes a plurality of keys for generating input signals for reducing and increasing the playback speed.

## Claims

1. A playback method in a digital multimedia broadcasting receiver, comprising the steps of:
setting at least one playback start point during storage of digital multimedia broadcasting;
checking whether a playback start point is selected from the at least one playback start point during playback of a stored broadcasting file; and
playing back the stored broadcasting file from the selected playback start point when the playback start point is selected.

2. A playback method in a digital multimedia broadcasting receiver, comprising the steps of:
setting at least one playback start point during playback of a stored broadcasting file;
checking whether a playback start point is selected from the at least one playback start point during playback of the stored broadcasting file in which the at least one playback start point is set; and
playing back the stored broadcasting file from the selected playback start point when the playback start point is selected.

3. The playback method of claim 1 or 2, wherein, when a set key input is sensed, a time at which the key input is sensed is set as the playback start point.

4. The playback method of one of claims 1 to 3, further comprising marking a point that is set as the at least one playback start point on a playback time display means for displaying a playback time of the stored broadcasting file.

5. The playback method of one of claims 1 to 4, further comprising displaying wording indicating that the at least one playback start point is set when the at least one playback start point is set.

6. The playback method of one of claims 1 to 5, wherein the selected playback start point is selected from the at least one playback start point using a direction key.

7. A digital multimedia broadcasting receiver, comprising:
a key input unit for setting playback start points during storage of digital multimedia broadcasting and receiving a user key input for selecting one of the set playback start points;
a memory unit for storing a broadcasting file and data related to the broadcasting file in which the playback start points are set; and
a controller for setting time points at which the user key input through the key input unit are sensed as the playback start points of the broadcasting file that is being stored, storing the broadcasting file, and when a playback start point is selected through the key input unit from the set playback start points during playback of the stored broadcasting file, playing back the stored broadcasting file from the selected playback start point.

8. The digital multimedia broadcasting receiver of claim 7, wherein the controller marks a point that is set as one of the playback start points on a playback time display means for displaying a playback time of the stored broadcasting file.

9. The digital multimedia broadcasting receiver of claim 7 or 8, wherein the controller displays wording indicating that one of the playback start points is set when one of the playback start points is set.

10. The digital multimedia broadcasting receiver of one of claims 7 to 9, wherein the key input unit comprises a direction key for selected the playback start point from the set playback start points.

11. A digital multimedia broadcasting receiver, comprising:
a key input unit for setting at least one playback start point during playback of a stored broadcasting file and receiving a user key input for selecting one at least one playback start point;
a memory unit for storing the stored broadcasting file and data related to the stored broadcasting file in which the at least one playback start point is set; and
a controller for setting a time point at which the user key input through the key input unit is sensed as the at least one playback start point of the broadcasting file that is being played back, storing the broadcasting file, and when a playback start point is selected through the key input unit from the at least one playback start point during playback of the stored broadcasting file in which the at least one playback start point is set, playing back the stored broadcasting file from the selected playback start point.

12. The digital multimedia broadcasting receiver of claim 11, wherein the controller marks a point that is set as one at least one playback start point on a playback time display means for displaying a playback time of the stored broadcasting file.

13. The digital multimedia broadcasting receiver of claim 11 or 12, wherein the controller displays wording indicating that the at least one playback start point is set when the at least one playback start point is set.

14. The digital multimedia broadcasting receiver of one of claims 11 to 13, wherein the key input unit comprises a direction key for choosing the selected playback start point from the at least one playback start point.
